# EUROPÄISCHE PATENTSCHRIFT

(11) **EP 1 052 114 B1**
(45) Veröffentlichungstag und Bekanntmachung des Hinweises auf die Patenterteilung: **19.05.2004**
(21) Anmeldenummer: 00108314.6
(22) Anmeldetag: 15.04.2000
(51) Int. Cl.: B44C 1/17, B41M 3/12, B41M 5/025, B41J 2/175, B41M 1/34, C09D 11/00

(54) **Verfahren zur Dekoration fester Materialien**
Process for decorating solid material
Procédé de décoration de matériaux rigides

(30) Priorität: 12.05.1999 DE 19921925
(43) Veröffentlichungstag der Anmeldung: 15.11.2000
(73) Patentinhaber: dmc2 Degussa Metals Catalysts Cerdec AG, 60287 Frankfurt am Main (DE)
(72) Erfinder: Pfaff, Peter, Dr., 61476 Kronberg (DE); Ragnetti, Maurizio, Dr., 55246 Mainz-Kostheim (DE)
(74) Vertreter: Reinhardt, Markus, Dipl.-Ing.

(56) Entgegenhaltungen:
- EP-A- 0 181 198
- WO-A-94/18011
- FR-A- 2 666 052
- FR-A- 2 750 419
- US-A- 4 814 786
- US-A- 5 538 550

## Beschreibung

Die Erfindung richtet sich auf ein Verfahren zur Dekoration der Oberfläche fester, insbesondere dekorbrandfähiger Materialien durch Direkt- oder Indirektdruck unter Verwendung einer ein Pigment und ein thermoplastisches Medium enthaltenden Farbpaste (thermoplastische Farbpaste), wobei die Farbpaste mittels Inkjet-Technologie auf das zu dekorierende Material oder ein Transfermaterial gedruckt wird. Das Verfahren richtet sich insbesondere auf die Dekoration von Oberflächen aus Glas, Porzellan, Email und anderen keramischen Oberflächen.

Die Herstellung von Dekoren durch direktes oder indirektes Bedrucken eines zu dekorierenden Gegenstands, darunter Papier, Metalle, Kunststoffe, Glas, Porzellan, Email und andere keramische Materialien, unter Verwendung von pigmentierten Farbpasten ist an sich bekannt. Im Falle der Dekoration dekorbrandfähiger Materialien, wie Glas, Porzellan und andere gebrannte, bisquit-gebrannte oder ungebrannte keramische Artikel, schließt sich an das Aufbringen des Dekors auf die zu dekorierende Oberfläche ein Brand bei 500 bis 1400 °C an, wobei das Dekor eingebrannt und gegebenenfalls auch ein teilweise oder ungebrannter Artikel glatt gebrannt wird. Obgleich die Inkjet-Technologie, ein digitales Druckverfahren, in üblichen Druckern für den Bürobereich als auch in der graphischen Technik breiten Eingang gefunden hat, konnte sie zur Dekoration keramischer Materialien noch nicht erfolgreich angewandt werden.

Beim Inkjet-Verfahren werden Farb- beziehungsweise Tintentröpfchen, gesteuert durch einen digitalen Datenspeicher, punktweise auf das zu bedruckende Material übertragen. Die Tropfen können hierbei kontinuierlich oder diskontinuierlich erzeugt werden. Einen Überblick über die Inkjet-Technologie vermittelt David H. Fishman in American Inkmaker / Juni 1997, Seiten 36-39. In den üblichen Inkjet-Druckverfahren werden als Drucktinten organische Farblösungen mit sehr niedriger Viskosität verwendet - üblich sind Inkjet-Tinten mit einer Viskosität im Bereich von 1 bis 10 mPa · s. Inkjet-Tinten können zwar in geringem Umfang auch Pigmente, insbesondere Mikropigmente, enthalten, jedoch ist es hiermit schwierig, die erforderliche niedrige Viskosität zu erhalten. Die Verwendung anorganischer Pigmente und insbesondere Tinten mit hohem Gehalt an anorganischen Pigmenten führen wegen des leichten Absetzens der spezifisch schweren Pigmente zu Störungen im Inkjet-Drucker. Bekannt ist auch, anstelle von dünnflüssiger Farbe Farbstifte in Wachsform zu verwenden ("Solid Inkjet"). Auch derartige Farbstifte in Wachsform enthalten als farbgebende Komponente darin gelöste organische Farbstoffe oder Pigmente mit einer Dichte, die jener des sie umgebenden Wachses nahekommt, im allgemeinen also organische Pigmente, wie Ruß, womit ein Absetzen der Pigmente und damit eine Störung der Funktion des Inkjet-Druckers weitgehend vermieden wird.

Aus der WO 97/42040 sind Abziehbilder bekannt, deren Dekorschicht mittels eines Inkjet-Druckers aufgebracht wird. Einsetzbar sind hierbei Ein- oder Mehrfarben-Inkjet-Drucker. Außer den üblichen wäßrigen Farbsystemen für Inkjet-Drucker werden in diesem Verfahren auch sogenannte "solid inks", also Systeme aus in einem wachsartigen Medium dispergierten Farben oder Pigmenten verwendet. In diesem Dokument werden keine Hinweise gegebenen, ob es sich um organische oder anorganische Pigmente handelt. Dieses Dokument enthält keinen Hinweis, wonach die Abziehbilder auf keramische Artikel übertragen und anschließend das Dekor durch einen Dekorbrand eingebrannt werden kann. Dies sowie die Tatsache, daß nach Kenntnis der Erfinder der vorliegenden Anmeldung im Markt erhältliche "solid inks" im wesentlichen keine anorganischen Pigmente enthalten, sind Indizien dafür, daß es sich bei den Pigmenten gemäß WO 97/42040 im wesentlichen um organische und nicht um anorganische Pigmente handelt.

Versuche, keramische Farben im Inkjet-Verfahren zu verdrucken und damit das Inkjet-Verfahren auch zur Dekoration keramischer Artikel, wie Glas, Email und Porzellan, zur Verfügung zu stellen, scheiterten bisher immer an der starken Sedimentationsneigung der spezifisch schweren und groben Farbpulver. Das spezifische Gewicht von Aufglasur- und Glasfarben liegt zwischen 3,5 und 6,0 kg/l, die mittlere Kornfeinheit dieser Produkte liegt bei 3 bis 5 µm. Diese Produkte sedimentieren aus wäßrigen oder alkoholischen Suspensionen mit üblicher Inkjet-Verarbeitungsviskosität innerhalb weniger Sekunden zu teilweise über 50 %. Solche Suspensionen würden zu einer schnellen Verstopfung der Druckdüsen und des ganzen Inkjet-Druckapparats führen. Auch flüssige Farbpasten mit wesentlich höherer Viskosität, beispielsweise 5000 mPa · s, wie sie im Siebdruck für die Glasdekoration angewendet werden, neigen zur Entmischung und müssen nach 15-minütigem Stehen wieder aufgerührt werden.

Aufgabe der vorliegenden Erfindung ist es, ein Verfahren aufzuzeigen, womit Farbpasten mit hohem Gehalt an anorganischen Pigmenten und/oder keramischen Dekorfarben durch Inkjet-Technologie verdruckt werden können. Eine weitere Aufgabe richtet sich darauf, dekorbrandfähige Materialien, wie Glas, Email, Porzellan und andere keramische Materialien, unter Verwendung von keramische Dekorfarben enthaltende Farbpasten unter Einsatz eines Inkjet-Verfahrens zu dekorieren, wobei das Dekor durch Direkt- oder Indirektdruck auf dem zu dekorierenden Material appliziert wird. Eine weitere Aufgabe besteht darin, mittels Inkjet Farbpasten mit einem Gehalt von über 50 Gew.-% an anorganischen Materialien, insbesondere anorganischen Pigmenten und Glasfluß, zu verdrucken. Diese und weitere aus der Beschreibung sich ergebende Aufgaben werden durch das erfindungsgemäße Verfahren gelöst.

Aus der US 5 538 550 ist ein Verfahren zum Verdrucken von, bei Ranmtemperatur festen, pigmenthaltigen Tinten mit einem maximalen Gehalt von 20 Gewichts % an Pigmenten bekannt.

Gefunden wurde ein Verfahren zur Dekoration fester, insbesondere dekorbrandfähiger Materialien, umfassend Aufbringen einer Dekorschicht auf der Basis einer ein Pigment und ein thermoplastisches Medium enthaltenden Farbpaste (thermoplastische Farbpaste) auf eine Oberfläche des zu dekorierenden Materials mittels Direkt- oder Indirektdruck, wobei die Farbpaste mittels Inkjet-Technologie verdruckt wird, das dadurch gekennzeichnet ist, daß man die Farbpaste, welche mindestens 30 Gew.-% anorganische Feststoffe aus der Reihe der Pigmente, Glasfritten und anderen glasbildenden Komponenten enthält, mittels eines beheizbaren Inkjet-Schreibkopfs, dessen Temperatur oberhalb des Schmelzpunktes der Farbpaste gehalten wird, auf die Oberfläche des zu dekorierenden Materials oder ein Transfermaterial aufträgt. Die Unteransprüche richten sich auf bevorzugte Ausführungsformen sowie auf jene Verfahren, welche sich auf die Dekoration dekorbrandfähiger Materialien richten.

Überraschenderweise zeigen geschmolzene thermoplastische Farbpasten, wie sie zur Behälterglasdekoration verwendet werden, und demgemäß einen sehr hohen Gehalt an anorganischen Feststoffen, nämlich Glasfarben, enthalten, nahezu kein Absetzen. Nach Abschaltung der Beheizung im Inkjet-Schreibkopf und/oder im Versorgungselement der Inkjet-Druckvorrichtung erstarrt die thermoplastische Farbpaste sofort, so daß es auch bei langer Standzeit zu keiner Sedimentation kommt.

Das thermoplastische Medium weist im allgemeinen einen Schmelzpunkt im Bereich von 30 bis 100 °C, vorzugsweise 40 bis 80 °C und insbesondere 45 bis 60 °C auf. Es war nicht vorhersehbar, daß thermoplastische Farbpasten mit einem Gehalt von über 30 Gew.-% anorganischen Feststoffen problemlos mittels der Inkjet-Technologie verdruckt werden können. Thermoplastische Farben, wie sie zur Dekoration keramischer Artikel zu verwenden sind, enthalten vorzugsweise über 50 Gew.-% anorganische Feststoffe. Unterglasurfarben enthalten zweckmäßigerweise Farbpulver, also Gemische aus einem oder mehreren anorganischen Pigmenten und einem Glasfluß in einer Menge von etwa 65 bis 75 Gew.-%, Email-, Steingut- und Porzellanfarben in einer Menge im Bereich von 70 bis 80 Gew.-% und Glasfarben im Bereich von 80 bis 90 Gew.-%.

Die erfindungsgemäß zu verwendenden thermoplastischen Farbpasten - dieser Begriff wird beibehalten, obgleich ein pastöser bis flüssiger Zustand der Farbpasten erst nach deren Aufschmelzen erreicht wird - können ein oder mehrere anorganische Pigmente beliebiger Struktur und beliebiger chemischer Zusammensetzung enthalten. Für keramische Zwecke werden solche Pigmente herangezogen, welche unter den Brennbedingungen im wesentlichen stabil sind. Außer den Pigmenten können die thermoplastischen Farbpasten auch Glasfritten oder eine Kombination von Stoffen, welche unter den Brennbedingungen zu einem Glas zusammenschmelzen, eingesetzt werden. Bei den glasbildenden Komponenten handelt es sich um solche, wie sie aus Glasurzusammensetzungen, insbesondere transparenten Glasurzusammensetzungen, bekannt sind. Für die keramische Dekoration enthält die thermoplastische Farbpaste außer dem thermoplastischen Medium üblicherweise eine keramische Dekorfarbe, worunter der Fachmann ein feinpulverisiertes Gemenge von silikatischen Gläsern (Flüssen) und temperaturbeständigen Pigmenten versteht. Die Herstellung von Dekorfarben umfaßt im allgemeinen eine gemeinsame Vermahlung eines Gemischs aus dem/den Pigment/en und der/den Komponente/n des Glasflusses.

Das thermoplastische Medium der Farbpaste kann eine oder mehrere monomere, oligomere oder polymere Verbindungen enthalten. Besonders zweckmäßige monomere oder gegebenenfalls oligomere Verbindungen, welche in der Regel den Hauptbestandteil des thermoplastischen Mediums ausmachen, sind Paraffine, Fettalkohole, Fettsäuren, Fettsäureester und Fettsäureamide. Im allgemeinen enthalten diese Verbindungen mindestens einen aliphatischen Rest mit mindestens 10 C-Atomen, vorzugsweise 12 bis 30 C-Atomen. Besonders bevorzugt werden Fettalkohole mit 12 bis 18 C-Atomen. Alternativ oder in Ergänzung zu den zuvor genannten Stoffklassen kann das thermoplastische Medium eine oder mehrere polymere oder copolymere Verbindungen aus der Reihe der Polyolefine, Polyoxyalkylene, Polyamide, Polyester, Acrylat- und Methacrylatharze, Naturharze und Cellulosederivate enthalten. Gemäß einer weiteren Alternative enthält das thermoplastische Medium eine Kombination aus einer oder mehreren der aliphatischen Verbindungen und eine oder mehrere der polymeren Verbindungen. Gemäß einer besonders bevorzugten Ausführungsform enthält das thermoplastische Medium als Hauptkomponente eine oder mehrere Verbindungen aus der Reihe der Fettalkohole, Paraffine, gehärteten Fette oder Polyoxyethylene mit einem Molekulargewicht von mindestens 10.000 und als Nebenkomponente eine oder mehrere Verbindungen aus der Reihe modifizierter Kolophoniumharze, Methacrylatharze und Cellulosederivaten, wie methylierten, ethylierten oder carboxymethylierten Cellulosen.

Auf die mittels eines Inkjet-Druckverfahrens auf die zu dekorierende Oberfläche oder ein geeignetes Transfermaterial aufgedruckte Dekor kann zusätzlich eine Deckschicht aus einem glasbildenden Material aufgebracht werden. Der Auftrag der glasbildenden Schicht kann dabei ebenfalls mittels Inkjet oder mittels eines anderen zur Erzeugung von Deckschichten üblichen Verfahrens erfolgen. Eine Deckschicht ist insbesondere bei der Herstellung keramischer Dekore zweckmäßig, wenn das eigentliche Dekor gegenüber externen Einflüssen geschützt werden soll.

Wie bereits festgestellt, ist es auch möglich, das erfindungsgemäße Verfahren zur Erzeugung eines das dekortragende Transfermaterial für den Indirektdruck zu verwenden. Die auf ein im allgemeinen mit einer Trennschicht versehenes Transfermaterial aufgetragene Dekorschicht oder eine Kombination aus einer Dekorschicht und Deckschicht sowie einer darüber aufgetragenen üblichen organischen Filmschicht kann mittels Schiebebild, üblicherweise einem Naßabziehbild, mittels Heißablösebild (heat release) oder einem üblichem Umdruckverfahren, beispielsweise einem Tamponumdruckverfahren, auf die Oberfläche des zu dekorierenden Materials übertragen werden.

Zum Verdrucken der thermoplastischen Farbpaste eignen sich übliche Inkjet-Drucker mit einer Vorrichtung zum Beheizen des Inkjet-Schreibkopfs. Zweckmäßigerweise steht der Inkjet-Schreibkopf mit einem Versorgungselement in Verbindung, wobei auch das Versorgungselement beheizt wird. Um Sedimentationsprobleme auszuschließen, ist es vorteilhaft, den Schreibkopf und das Versorgungselement so miteinander zu verbinden, daß die geschmolzene Farbpaste zwischen dem Schreibkopf und dem Versorgungselement umgewälzt werden kann. Eine bevorzugte Vorrichtung zum Inkjet-Drucken thermoplastischer Farbpasten mit einem hohem Anteil an anorganischen Feststoffen umfaßt somit einen Inkjet-Druckkopf, einen Farbbehälter und eine Schlauchpumpe; diese Elemente sind im Kreislauf miteinander verbunden und stehen beim Betrieb unter Überdruck, z.B. von 1 bis 5 bar. Der Schreibkopf umfaßt üblicherweise einen würfelförmigen Hohlraum (Inkjet-Zelle). An der Unterseite des Schreibkopfs sind eine oder mehrere Bohrungen zur Ausbildung der Druckdüsen angeordnet. Die Druckdüsen werden durch elektromechanisch bewegte Gummistößel (elektromechanische Einheit) von innen verschlossen beziehungsweise geöffnet. Die Farbpaste wird aus einem Vorratsbehälter seitlich in den Schreibkopf hineingepumpt, durch eine weitere Öffnung fließt die Farbpaste in den Farbbehälter zurück.

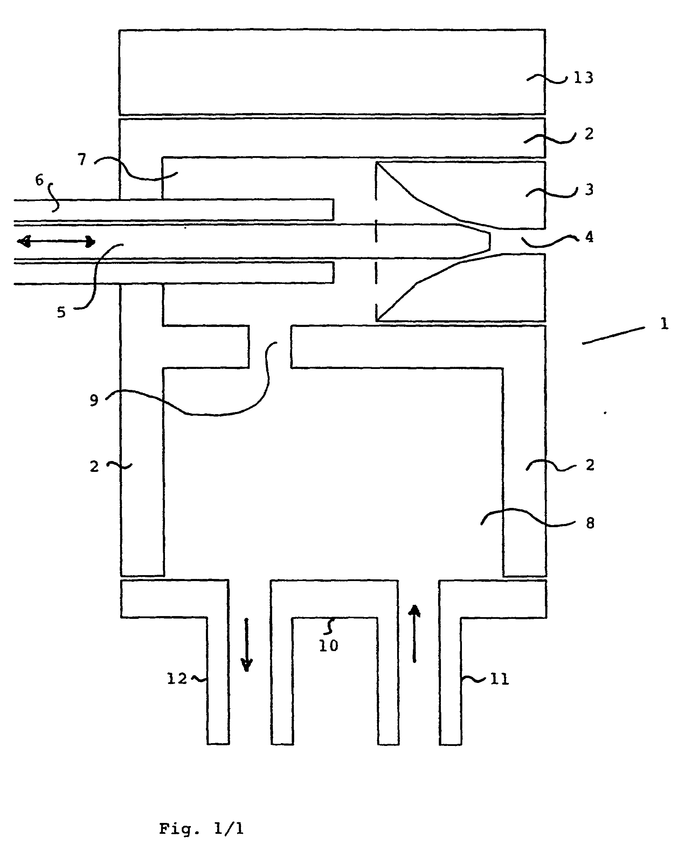

Die Figur zeigt einen Querschnitt durch eine Inkjet-Zelle 1, deren Ventilstößel 5 in geschlossener Position dargestellt ist. Mehrere paketartig zusammengeschaltete Inkjet-Zellen bilden den eigentlichen Schreibkopf der Inkjet-Druckvorrichtung. Die Zelle umfaßt einen Basiskörper 2, eine im Bodenbereich angeordnete Düse 3 mit der Düsenöffnung 4, den Ventilstößel 5 und eine piezoelektrische Einheit 6, welche die Hin- und Herbewegung des Stößels ermöglicht. Die Kammer 7 der Inkjet-Zelle steht über einen Kanal 9 mit einem Raum 8 zur Versorgung einer oder mehrerer Inkjet-Zellen mit Farbpaste in Verbindung. Die Seitenwand 10 des Basiskörpers 2 enthält einen Stutzen 11 zum Zuführen der Farbpaste und einen Stutzen 12 zum Abführen derselben. Der Stutzen 11 steht mit einer nicht gezeigten Pumpe in Verbindung, der Stutzen 12 mit einem ebenfalls nicht gezeigten Versorgungselement, üblicherweise einem Vorratsbehälter. Zur Vervollständigung des Kreislaufs sind die Pumpe und das Versorgungselement über eine nicht gezeigte Leitung miteinander verbunden. Zum Schmelzen der thermoplastischen Farbpaste in der Inkjet-Zelle steht der Basiskörper 2 mit einem Heizelement 13 in Verbindung, so daß die Farbpaste in der Kammer 7 und in dem Raum 8 in pastösem bis flüssigem Zustand vorliegt. Zweckmäßigerweise enthält das Versorgungselement gleichfalls eine Heizvorrichtung.

Zum Druck wird der zu bedruckende Gegenstand zweckmäßigerweise auf einem X-Y-Tisch unter dem Schreibkopf plaziert. Eine Steuereinheit steuert die Öffnung und Schließung der Düsen sowie die Bewegung des Tisches mit dem zu bedruckenden Gegenstand. Der zu bedruckende Gegenstand befindet sich etwa 1 cm von den Düsenöffnungen des Inkjet-Schreibkopfes entfernt, und die tropfenförmig austretende Farbpaste wird zielgenau plaziert und erstarrt dabei. Es ist auch möglich, den zu dekorierenden Gegenstand ortsfest zu halten und den Inkjet-Schreibkopf beweglich anzuordnen.

Soweit ein dekorbrandfähiges Material direkt oder indirekt bedruckt wurde, schließt sich an den Druck beziehungsweise die Übertragung des Druckbildes von einem Träger auf den zu dekorierenden Gegenstand in bekannter Weise ein Brand an. Bei der Dekoration von Glasgegenständen liegt die Brenntemperatur üblicherweise bei 500 bis 650 °C. Ein Aufglasurdekor wird üblicherweise bei 700 bis 900 °C eingebrannt und ein Inglasurdekor bei einer Temperatur von über 1100 °C.

Der wesentliche Vorteil der Erfindung besteht darin, daß das Inkjet-Druckverfahren auch für solche Farben herangezogen werden kann, welche einen hohen Gehalt an anorganischen Bestandteilen aufweisen. Damit wird die Inkjet-Technologie auch zur Herstellung von keramischen Dekorationen verwendbar. Die Erfindung wird anhand der nachfolgenden Beispiele weiter verdeutlicht.

### Beispiele

Zum Bedrucken wurde eine Anlage verwendet, welche einen Inkjet-Druckkopf, einen Farbbehälter, eine Schlauchpumpe, einen X-Y-Tisch und eine Steuereinheit umfaßte. Der Inkjet-Druckkopf, Farbbehälter und Schlauchpumpe waren in der zuvor dargestellten Form miteinander verbunden, so daß geschmolzene Farbpaste umgewälzt werden konnte. Mittels Preßluft wurde der Farbbehälter mit einem Druck von 0,4 MPa beaufschlagt. Der Druckkopf enthielt acht Bohrungen in einer Linie und umfaßte demgemäß auch acht piezoelektrische Elemente. Sowohl der Druckkopf als auch der Farbbehälter waren mit einer Heizvorrichtung ausgestattet.

Das in den Beispielen eingesetzte Medium bestand aus 85 Gew.-% Cetylalkohol, 6 Gew.-% Ethylcellulose (Ethocel 20 cP, Dow Chemical) und 9 Gew.-% eines modifizierten Kolophoniumharzes (Stybelite Ester 5, Herkules Powder). Dieses thermoplastische Medium erstarrt bei 52 °C.

Farbpasten: Glasfarben wurden mit dem genannten Medium im Verhältnis 85 Gew.-% Farbpulver und 15 Gew.-% Medium angepastet. Email-, Steingut- und Porzellanfarben wurden mit diesem Medium im Verhältnis von 75 bis 85 Gew.-% Farbpulver auf 20 bis 25 Gew.-% Medium angepastet. Unterglasurfarben wurden mit diesem Medium im Verhältnis von 70 Gew.-% Farbpulver und 30 Gew.-% Medium angepastet.

Als Druckvorlage diente eine Schwarz-Weiß-Photografie. Sie ist mittels eines Computerprogramms zur Erstellung von Siebdruckvorlagen frequenzmoduliert digitalisiert worden. Diese Bitmap-Datei diente der Steuerung des Inkjet-Schreibkopfes und des X-Y-Tischs. Die Farbpaste erstarrte sofort auf der Oberfläche und war grifffest. Der Druck erfolgte linienweise.

Die bei Raumtemperatur festen Farbpasten wurden mit der zuvor beschriebenen Inkjet-Druckvorrichtung zur direkten Dekoration von Glas, Email, Steingut und Porzellan eingesetzt. Die bedruckten Gegenstände wurden bei einer auf das Material abgestimmten Brenntemperatur gebrannt. Es wurden gute Druckergebnisse erzielt.

Die Versuchsanlage war nur für eine Farbe ausgelegt. Durch vierfache Wiederholung des Drucks mit vier verschiedenen Farben - blau, purpur, gelb und schwarz - wurde ein Vier-Farbdruck erzeugt. Als Druckvorlage diente eine Photografie, aus welcher mit dem computergestützten Farbauszugsverfahren CerDeChrom® (Cerdec AG und Color Solutions Inc.) Farbauszüge erstellt wurden. Diese vier Bitmaps dienten zur Steuerung des Farbauftrags.

Für den Indirektdruck wurden Abziehbilder hergestellt: Leichtkarton, der einseitig mit einer wasserlöslichen Schicht kaschiert war, wurde mittels der Inkjet-Vorrichtung und den oben beschriebenen thermoplastischen Farbpasten bedruckt. Der Druck wurde in üblicher Weise überfilmt. Das Bild wurde problemlos auf den zu dekorierenden Gegenstand übertragen und eingebrannt. Auch bei diesen Indirektdruckverfahren wurden gute Druckergebnisse erzielt.

## Patentansprüche

1. Verfahren zur Dekoration fester, insbesondere dekorbrandfähiger Materialien, umfassend Aufbringen einer Dekorschicht auf der Basis einer ein Pigment und ein thermoplastisches Medium enthaltenden Farbpaste (thermoplastische Farbpaste) auf eine Oberfläche des zu dekorierenden Materials mittels Direkt- oder Indirektdruck, wobei die Farbpaste mittels Inkjet-Technologie verdruckt wird,
**dadurch gekennzeichnet,**
**daß** man die Farbpaste, welche mindestens 30 Gew.-% anorganische Feststoffe aus der Reihe der Pigmente, Glasfritten und anderen glasbildenden Komponenten enthält, mittels eines beheizbaren Inkjet-Schreibkopfs, dessen Temperatur oberhalb des Schmelzpunktes der Farbpaste gehalten wird, auf die Oberfläche des zu dekorierenden Materials oder ein Transfermaterial aufträgt.

2. Verfahren nach Anspruch 1,
**dadurch gekennzeichnet,**
**daß** man eine Farbpaste verwendet, deren thermoplastisches Medium im Bereich von 30 bis 100 °C, insbesondere 45 bis 60 °C, schmilzt.

3. Verfahren nach Anspruch 1 oder 2,
**dadurch gekennzeichnet,**
**daß** man eine Farbpaste mit einem Gehalt von über 50 Gew.-% Feststoffen, insbesondere keramischen Dekorfarben, verdruckt.

4. Verfahren nach einem der Ansprüche 1 bis 3,
**dadurch gekennzeichnet,**
**daß** man eine Farbpaste verwendet, deren thermoplastisches Medium ausgewählt ist aus
(i) einer oder mehreren Verbindungen aus der Reihe der Paraffine, Fettalkohole, Fettsäuren, Fettsäureester und Fettsäureamide oder
(ii) einer oder mehreren polymeren oder copolymeren Verbindungen aus der Reihe der Polyolefine, Polyoxyalkylene, Polyamide, Polyester, Acrylat- und Methacrylatharze, Naturharze und Cellulosederivate oder
(iii) je einer oder mehrerer Verbindungen aus der Reihe (i) und (ii).

5. Verfahren nach Anspruch 4,
**dadurch gekennzeichnet,**
**daß** das thermoplastische Medium als Hauptkomponente eine oder mehrere Verbindungen aus der Reihe der Fettalkohole, Paraffine, gehärteten Fette oder Polyoxyethylene mit einem Molekulargewicht von mindestens 10000 und als Nebenkomponente eine oder mehrere Verbindungen aus der Reihe modifizierter Kolophoniumharze, Methacrylatharze und methylierten, ethylierten oder carboxymethylierten Cellulosen enthält.

6. Verfahren nach einem der Ansprüche 1 bis 5,
**dadurch gekennzeichnet,**
**daß** man eine Farbpaste verwendet, welche 10 bis 40 Gew.-% thermoplastisches Medium und 90 bis 60 Gew.-% anorganische Feststoffe aus der Reihe der Pigmente, Glasfritten und Glasflüsse, insbesondere keramische Dekorfarben, enthält.

7. Verfahren nach einem der Ansprüche 1 bis 6,
**dadurch gekennzeichnet,**
**daß** man die auf ein Transfermaterial aufgetragene Dekorschicht, welche zusätzlich eine Deckschicht enthalten kann, mittels Schiebebild (Naßabziehbild), Heißablösebild (heat-release) oder Umdruck auf die Oberfläche des zu dekorierenden Materials überträgt.

8. Verfahren nach einem der Ansprüche 1 bis 7,
**dadurch gekennzeichnet,**
**daß** man die Farbpaste bei einer Temperatur oberhalb des Schmelzpunktes des Mediums zwischen dem Inkjet-Schreibkopf und einem damit in Verbindung stehenden beheizbaren Versorgungselement zwecks Vermeidung einer Sedimentation umpumpt.

9. Verfahren nach einem der Ansprüche 1 bis 8,
**dadurch gekennzeichnet,**
**daß** man einen beheizbaren Inkjet-Schreibkopf mit 8 bis 24 einzeln ansteuerbaren Düsenöffnungen und einem Versorgungselement für die Farbpaste stationär und die zu bedruckende Oberfläche in X- und/oder Y-Richtung transportabel anordnet und das Dekor durch computergesteuertes Öffnen und Schließen der Düsenöffnungen und Bewegung der zu bedruckenden Oberfläche in X- und/oder Y-Richtung ausbildet.

10. Verfahren nach einem der Ansprüche 1 bis 9,
**dadurch gekennzeichnet,**
**daß** man die Oberfläche eines dekorbrandfähigen Materials unter Verwendung einer mindestens eine keramische Dekorfarbe enthaltenden thermoplastischen Farbpaste direkt oder indirekt bedruckt und die Dekorschicht bei einer Temperatur im Bereich von 500 bis 1400 °C einbrennt.

11. Verfahren nach einem der Ansprüche 1 bis 10,
**dadurch gekennzeichnet,**
**daß** man die Oberfläche von Glas, Porzellan, Keramik, Email und metallischen Gegenständen dekoriert.

12. Verfahren nach Anspruch 10 oder 11,
**dadurch gekennzeichnet,**
**daß** man auf die Dekorschicht aus der thermoplastischen Farbpaste eine Deckschicht aufträgt, wobei die Deckschicht ein beim Brand eine glasige Schicht bildendes Material enthält.

13. Verfahren nach einem der Ansprüche 1 bis 12,
**dadurch gekennzeichnet,**
**daß** man die Farbpaste mittels einer einen beheizbaren Inkjet-Schreibkopf, ein hiermit in Verbindung stehendes Versorgungselement und eine Vorrichtung zum Umwälzen der geschmolzenen Farbe zwischen dem Schreibkopf und dem Versorgungselement enthaltenden Druckvorrichtung auf die Oberfläche des zu dekorierenden Materials oder Transfermaterials aufträgt.

## Claims

1. Process for decorating solid materials, especially materials capable of decorative firing, comprising the application by means of direct or indirect printing of a decorative layer based on a colour paste containing a pigment and a thermoplastic medium (thermoplastic colour paste) to a surface of the material to be decorated, the colour paste being printed by means of inkjet technology,
**characterised in that**
the colour paste, which contains at least 30 wt.% inorganic solids from the group of the pigments, glass frits and other glass-forming components, is applied to the surface of the material to be decorated or to a transfer material by means of a heatable inkjet print head whose temperature is kept above the melting point of the colour paste.

2. Process according to claim 1,
**characterised in that**
there is used a colour paste whose thermoplastic medium melts in the range from 30 to 100°C, especially from 45 to 60°C.

3. Process according to claim 1 or 2,
**characterised in that**
a colour paste having a content of over 50 wt.% solids, especially decorative ceramic colours, is printed.

4. Process according to any one of claims 1 to 3,
**characterised in that**
there is used a colour paste whose thermoplastic medium is selected from
(i) one or more compounds from the group consisting of paraffins, fatty alcohols, fatty acids, fatty acid esters and fatty acid amides or
(ii) one or more polymeric or copolymeric compounds from the group consisting of polyolefins, polyoxyalkylenes, polyamides, polyesters, acrylate and methacrylate resins, natural resins and cellulose derivatives or
(iii) in each case one or more compounds from groups (i) and (ii).

5. Process according to claim 4,
**characterised in that**
the thermoplastic medium contains as the main component one or more compounds from the group consisting of fatty alcohols, paraffins, hardened fats and polyoxyethylenes having a molecular weight of at least 10,000 and as the subsidiary component one or more compounds from the group consisting of modified colophony resins, methacrylate resins and methylated, ethylated or carboxymethylated celluloses.

6. Process according to any one of claims 1 to 5,
**characterised in that**
there is used a colour paste which contains from 10 to 40 wt.% thermoplastic medium and from 90 to 60 wt.% inorganic solids from the group consisting of pigments, glass frits and glass fluxes, especially decorative ceramic colours.

7. Process according to any one of claims 1 to 6,
**characterised in that**
the decorative layer applied to a transfer material, which decorative layer may additionally contain a cover layer, is transferred to the surface of the material to be decorated by means of transfer (wet transfer), heat release or transfer printing.

8. Process according to any one of claims 1 to 7,
**characterised in that**
the colour paste is pumped between the inkjet print head and a heatable supply element in communication therewith at a temperature above the melting point of the medium in order to avoid sedimentation.

9. Process according to any one of claims 1 to 8,
**characterised in that**
a heatable inkjet print head having from 8 to 24 individually controllable nozzle openings and a supply element for the colour paste is arranged in a stationary manner and the surface to be printed is arranged to be movable in the X- and/or Y-direction, and the decoration is formed by the computer-controlled opening and closing of the nozzle openings and movement of the surface to be printed in the X-and/or Y-direction.

10. Process according to any one of claims 1 to 9,
**characterised in that**
the surface of a material capable of decorative firing is printed directly or indirectly using a thermoplastic colour paste containing at least one decorative ceramic colour, and the decorative layer is baked at a temperature in the range of from 500 to 1400°C.

11. Process according to any one of claims 1 to 10,
**characterised in that**
the surface of glass, porcelain, ceramics, enamel and of metal objects is decorated.

12. Process according to claim 10 or 11,
**characterised in that**
a cover layer is applied to the decorative layer of the thermoplastic colour paste, the cover layer containing a material that forms a glassy layer when baked.

13. Process according to any one of claims 1 to 12,
**characterised in that**
the colour paste is applied to the surface of the material to be decorated or of the transfer material by means of a printing device containing a heatable inkjet print head, a supply element in communication therewith and a device for circulating the molten ink between the print head and the supply element.

## Revendications

1. Procédé pour la décoration de matériaux rigides, en particulier aptes au recuit décoratif, comprenant la dépôt d'une couche décorative à base d'une pâte de couleur (pâte thermoplastique) contenant un pigment et un milieu thermoplastique, sur une surface du matériau à décorer au moyen d'une impression directe ou indirecte, la pâte de couleur étant imprimée à l'aide de la technologie d'impression par jet d'encre, **caractérisé en ce que** l'on dépose la pâte de couleur, laquelle contient au moins 30% en poids de matières solides inorganiques du groupe formé par les pigments, les frittes de verre et d'autres composants formant du verre, sur la surface du matériau à décorer ou sur un matériau de transfert, au moyen d'une tête d'écriture par jet d'encre thermique, dont la température est maintenue au-dessus du point de fusion de la pâte de couleur.

2. Procédé selon la revendication 1, **caractérisé en ce que** l'on utilise une pâte de couleur dont le milieu thermoplastique fond à des températures allant de 30°C à 100°C, en particulier de 45°C à 60°C.

3. Procédé selon la revendication 1 ou 2, **caractérisé en ce que** l'on imprime une pâte de couleur présentant une teneur en matières solides supérieure à 50% en poids, contenant en particulier des colorants décoratifs pour matériaux céramiques.

4. Procédé selon l'une quelconque des revendications 1 à 3, **caractérisé en ce que** l'on utilise une pâte de couleur dont le milieu thermoplastique est choisi parmi
(i) un ou plusieurs composés choisis dans le groupe formé par les paraffines, les alcools gras, les acides gras, les esters d'acides gras et les amides d'acides gras ou
(ii) un ou plusieurs composés polymères ou copolymères choisis dans le groupe formé par les polyoléfines, les polyoxyalkylènes, les polyamides, les polyesters, les résines acryliques et méthacryliques, les résines naturelles et les dérivés de cellulose ou
(iii) un ou plusieurs des composés du groupe (i) et (ii).

5. Procédé selon la revendication 4, **caractérisé en ce que** le milieu thermoplastique contient, en tant que composant principal, un ou plusieurs composés choisis dans le groupe formé par les alcools gras, les paraffines, les graisses durcies ou les polyoxyéthylènes présentant une masse moléculaire d'au moins 10 000 et, en tant que composant secondaire, un ou plusieurs composés choisis dans le groupe formé par les résines colophanes modifiées, les résines méthacryliques et les celluloses méthylées, éthylées ou carboxyméthylées.

6. Procédé selon l'une quelconque des revendications 1 à 5, **caractérisé en ce que** l'on utilise une pâte de couleur, laquelle contient un milieu thermoplastique à raison de 10% à 40% en poids et des matières solides inorganiques à raison de 90% à 60% en poids, choisie dans le groupe formé par les pigments, les frittes de verre et les fondants de verre, en particulier les colorants décoratifs pour matériaux céramiques.

7. Procédé selon l'une quelconque des revendications 1 à 6, **caractérisé en ce que** l'on transfère la couche décorative qui a été déposée sur un matériau de transfert, et qui peut présenter en outre une couche de revêtement, à l'aide d'une décalcomanie (transfert humide), d'une décalcomanie à chaud (enlèvement à chaud) ou d'un report sur la surface du matériau à décorer.

8. Procédé selon l'une quelconque des revendications 1 à 7, **caractérisé en ce que** la pâte de couleur est recyclée par pompage à une température supérieure au point de fusion du milieu entre la tête d'écriture par jet d'encre et un élément d'alimentation thermique raccordé à celle-ci afin d'éviter une sédimentation.

9. Procédé selon l'une quelconque des revendications 1 à 8, **caractérisé en ce que** l'on dispose une tête d'écriture par jet d'encre thermique possédant 8 à 24 buses d'éjection dirigeables individuellement et un élément d'alimentation pour la pâte de couleur de manière fixe et la surface à imprimer de manière mobile dans la direction des axes X et/ou Y, et que la décoration se forme au moyen de l'ouverture et de la fermeture commandées par ordinateur des buses d'éjection et du mouvement de la surface à imprimer dans la direction des axes X et/ou Y.

10. Procédé selon l'une quelconque des revendications 1 à 9, **caractérisé en ce que** l'on imprime directement ou indirectement la surface d'un matériau apte au recuit décoratif en utilisant une pâte de couleur thermoplastique, contenant au moins un colorant décoratif pour matériaux céramiques, et que l'on recuit la couche décorative à des températures allant de 500°C à 1400°C.

11. Procédé selon l'une quelconque des revendications 1 à 10, **caractérisé en ce que** l'on décore une surface de verre, de porcelaine, de céramique, d'émail et d'objets métalliques.

12. Procédé selon la revendication 10 ou 11, **caractérisé en ce que** l'on dépose, sur la couche décorative formée par la pâte de couleur thermoplastique, une couche de revêtement, la couche de revêtement contenant une matière formant une couche vitreuse lors du recuit.

13. Procédé selon l'une quelconque des revendications 1 à 12, **caractérisé en ce que** l'on dépose, sur la surface du matériau à décorer ou sur le matériau de transfert, la pâte de couleur au moyen d'un dispositif d'impression comprenant une tête d'écriture par jet d'encre thermique, un élément d'alimentation raccordé à celle-ci et un dispositif de recyclage de la pâte de couleur fondue entre la tête d'écriture et l'élément d'alimentation.
